# EUROPEAN PATENT APPLICATION

(11) **EP 4 842 060 A1**
(43) Date of publication of application: **18.11.2026**
(21) Application number: 25751678.1
(22) Date of filing: 07.02.2025
(51) Int. Cl.: H04W 36/00

(54) **COMMUNICATION METHOD, APPARATUS, AND SYSTEM**

(30) Priority: 08.02.2024 CN 202410177946
(71) Applicant: Huawei Technologies Co., Ltd., Shenzhen, Guangdong 518129 (CN)
(72) Inventor: YOU, Chunhua, Shenzhen, Guangdong 518129 (CN); FAN, Qiang, Shenzhen, Guangdong 518129 (CN); ZHANG, Hongzhuo, Shenzhen, Guangdong 518129 (CN); WANG, Yan, Shenzhen, Guangdong 518129 (CN)
(74) Representative: Pfenning, Meinig & Partner mbB
(86) International application number: PCT/CN2025/076303
(87) International publication number: WO 2025/168079

(57) **Abstract**

This application relates to the field of communication technologies and discloses a communication method, apparatus, and system. The method includes: A first network-side apparatus receives, from a second network-side apparatus, first identification information for a terminal-side apparatus, where the first identification information is associated with a first candidate cell managed by the second network-side apparatus; determines second identification information based on the first identification information, where the second identification information is different from the first identification information; and sends the second identification information to the terminal-side apparatus, where the second identification information is used to determine a processing manner associated with the first candidate cell. In this way, a first network device may reallocate identification information associated with a candidate cell to avoid conflicts between identification information allocated by different candidate network devices, enabling a terminal to accurately determine, based on the identification information associated with the candidate cell, a processing manner associated with the candidate cell, thereby facilitating handover of the terminal to the candidate cell.

## Description

### CROSS-REFERENCE TO RELATED APPLICATIONS

This application claims priority to Chinese Patent Application No. 202410177946.9, filed with the China National Intellectual Property Administration on February 8, 2024 and entitled "COMMUNICATION METHOD, APPARATUS, AND SYSTEM", which is incorporated herein by reference in its entirety.

### TECHNICAL FIELD

This application relates to the field of communication technologies, and in particular, to a communication method, apparatus, and system.

### BACKGROUND

Cell handover is an important feature in communication systems. Before the signal quality of a serving cell deteriorates, a network device hands over a terminal to a neighboring cell with better signal quality, thereby providing lossless or packet-loss-free communication services.

However, how to accurately determine a processing manner associated with a candidate cell, for example, whether to perform protocol layer reestablishment when the candidate cell is a target cell for handover, still needs to be further studied.

### SUMMARY

This application provides a communication method, apparatus, and system, to accurately determine a processing manner associated with a candidate cell, thereby facilitating handover of a terminal to the candidate cell.

According to a first aspect, an embodiment of this application provides a communication method. The method may be applied to a first network-side apparatus, and the first network-side apparatus may be a first network device or a component (for example, a chip or a circuit) in the first network device. For example, in the method, the first network-side apparatus receives, from a second network-side apparatus, first identification information for a terminal-side apparatus, where the first identification information is associated with a first candidate cell managed by the second network-side apparatus; determines second identification information based on the first identification information, where the second identification information is different from the first identification information; and sends the second identification information to the terminal-side apparatus, where the second identification information is used to determine a processing manner associated with the first candidate cell, where the processing manner includes: performing protocol layer reestablishment, or performing protocol layer data recovery, or skipping performing protocol layer reestablishment; and/or determining a TA of the first candidate cell based on user equipment UE measurement, or skipping determining a TA of the first candidate cell based on UE measurement.

According to the foregoing method, the first network device may determine the second identification information based on the first identification information, where the second identification information is different from the first identification information. In other words, the first network device may reallocate identification information associated with a candidate cell to avoid conflicts between identification information allocated by different candidate network devices, enabling a terminal to accurately determine, based on the identification information associated with the candidate cell, a processing manner associated with the candidate cell, thereby facilitating handover of the terminal to the candidate cell. This avoids a handover failure caused by an inaccurate processing manner associated with the determined candidate cell.

In a possible design, the first identification information is information determined by the second network-side apparatus to determine the processing manner.

In a possible design, that the second identification information is different from the first identification information includes: a value of the second identification information is different from that of the first identification information; or the second identification information includes the first identification information and information corresponding to the first candidate cell.

In this way, the first network device may modify the value of the first identification information to obtain the second identification information, or the first network device may use the first identification information as a part of the second identification information, so that a reallocation manner is relatively flexible.

In a possible design, the information corresponding to the first candidate cell includes group identifier information corresponding to the first candidate cell or identification information of a second network device.

In a possible design, the method further includes: receiving third identification information from a third network-side apparatus, where the third identification information is associated with a second candidate cell; and determining the second identification information based on the first identification information includes: determining the second identification information when the first identification information is the same as the third identification information.

In this way, the first network device may determine the second identification information when determining that the first identification information is the same as the third identification information (that is, a conflict occurs), so that more targeted reallocation can be performed.

In a possible design, the method further includes: sending a first message to the second network-side apparatus, where the first message is used to request configuration information of the processing manner.

In a possible design, the protocol layer reestablishment includes PDCP layer reestablishment or RLC layer reestablishment, and the protocol layer data recovery includes PDCP layer data recovery.

According to a second aspect, an embodiment of this application provides a communication method. The method may be applied to a terminal-side apparatus, and the terminal-side apparatus may be a terminal or a component (for example, a chip or a circuit) in the terminal. For example, in the method, the terminal-side apparatus receives a second message from a first network-side apparatus, where the second message includes first identification information and information corresponding to a first candidate cell managed by a second network-side apparatus; and determines, based on the first identification information and the information corresponding to the first candidate cell, a processing manner associated with the first candidate cell, where the first identification information is information determined by the second network-side apparatus to determine the processing manner, and the processing manner includes: performing protocol layer reestablishment, or performing protocol layer data recovery, or skipping performing protocol layer reestablishment; and/or determining a TA of the first candidate cell based on UE measurement, or skipping determining a TA of the first candidate cell based on UE measurement.

In a possible design, the information corresponding to the first candidate cell is determined by the first network-side apparatus.

In a possible design, determining, based on the first identification information and the information corresponding to the first candidate cell, the processing manner associated with the first candidate cell includes: when information corresponding to a source cell is the same as the information corresponding to the first candidate cell, and identification information associated with the source cell is the same as the first identification information, determining that the processing manner associated with the first candidate cell is skipping performing protocol layer reestablishment; or when information corresponding to a source cell is different from the information corresponding to the first candidate cell, or identification information associated with the source cell is different from the first identification information, determining that the processing manner associated with the first candidate cell is performing protocol layer reestablishment, or performing protocol layer data recovery.

In a possible design, determining, based on the first identification information and the information corresponding to the first candidate cell, the processing manner associated with the first candidate cell includes: when the information corresponding to the source cell is the same as the information corresponding to the first candidate cell, and the identification information associated with the source cell is the same as the first identification information, determining that the processing manner associated with the first candidate cell is determining the TA of the first candidate cell based on the UE measurement; or when the information corresponding to the source cell is different from the information corresponding to the first candidate cell, or the identification information associated with the source cell is different from the first identification information, determining that the processing manner associated with the first candidate cell is skipping determining the TA of the first candidate cell based on the UE measurement.

In a possible design, the first message further includes the identification information associated with the source cell and the information corresponding to the source cell.

In a possible design, the protocol layer reestablishment includes PDCP layer reestablishment or RLC layer reestablishment, and the protocol layer data recovery includes PDCP layer data recovery.

It may be understood that the communication method according to the second aspect corresponds to that according to the first aspect. For beneficial effects of related technical features in the second aspect, refer to the descriptions in the first aspect. Details are not described again.

According to a third aspect, an embodiment of this application provides a communication method. The method may be applied to a first network-side apparatus, and the first network-side apparatus may be a first network device or a component (for example, a chip or a circuit) in the first network device. For example, in the method, the first network-side apparatus sends a first message to a second network-side apparatus, where the first message is used to request to use first identification information as identification information associated with a first candidate cell; and receives a second message from the second network-side apparatus, where the second message indicates acceptance or rejection of using the first identification information as the identification information associated with the first candidate cell, and the identification information associated with the first candidate cell is used to determine a processing manner associated with the first candidate cell, where the processing manner includes: performing protocol layer reestablishment, or performing protocol layer data recovery, or skipping performing protocol layer reestablishment; and/or determining a TA of the first candidate cell based on UE measurement, or skipping determining a TA of the first candidate cell based on UE measurement.

According to the foregoing method, the first network device may send recommended identification information to a second network device, and the second network device may accept or reject the recommended identification information. Therefore, the second network device does not need to determine the identification information, so that a conflict between identification information allocated by different candidate network devices can be avoided, and a terminal can accurately determine, based on identification information associated with the candidate cell, a processing manner associated with the candidate cell, thereby facilitating handover of the terminal to the candidate cell. This avoids a handover failure caused by an inaccurate processing manner associated with the determined candidate cell.

In a possible design, the first message is further used to request to use the first identification information as identification information associated with a second candidate cell. Alternatively, the method further includes: sending a first message' to the second network device, where the first message' is used to request to use the first identification information as the identification information associated with the second candidate cell, and the first message' and the first message are different messages.

In a possible design, the method further includes: receiving topology information from the second network-side apparatus, where the topology information indicates that the first candidate cell and the second candidate cell correspond to a same DU, a same TRP, or same identification information; and determining the first identification information based on the topology information.

In this way, the second network device may send the topology information to the first network device, so that the identification information recommended by the first network device is more appropriate.

In a possible design, the second message indicates rejection of using the first identification information as the identification information associated with the first candidate cell, the second message includes second identification information, and the second identification information is used to request to use the second identification information as the identification information associated with the first candidate cell.

In a possible design, the second identification information is identification information that has been accepted by the second network-side apparatus.

In a possible design, the method further includes: sending a third message to a third network-side apparatus, where the third message is used to request to use third identification information as identification information associated with a third candidate cell, and the third identification information is different from the first identification information.

In a possible design, the protocol layer reestablishment includes PDCP layer reestablishment or RLC layer reestablishment, and the protocol layer data recovery includes PDCP layer data recovery.

According to a fourth aspect, an embodiment of this application provides a communication method. The method may be applied to a second network-side apparatus, and the second network-side apparatus may be a second network device or a component (for example, a chip or a circuit) in the second network device. For example, in the method, the second network-side apparatus receives a first message from a first network-side apparatus, where the first message is used to request to use first identification information as identification information associated with a first candidate cell; and sends a second message to the first network-side apparatus in response to the first message, where the second message indicates acceptance or rejection of using the first identification information as the identification information associated with the first candidate cell, and the identification information associated with the first candidate cell is used to determine a processing manner associated with the first candidate cell, where the processing manner includes: performing protocol layer reestablishment, or performing protocol layer data recovery, or skipping performing protocol layer reestablishment; and/or determining a TA of the first candidate cell based on UE measurement, or skipping determining a TA of the first candidate cell based on UE measurement.

In a possible design, the first message is further used to request to use the first identification information as identification information associated with a second candidate cell.

In a possible design, the method further includes: sending topology information to the first network-side apparatus, where the topology information indicates that the first candidate cell and the second candidate cell correspond to a same DU, a same TRP, or same identification information, and the topology information is used to determine the first identification information.

In a possible design, the second message indicates rejection of using the first identification information as the identification information associated with the first candidate cell, the second message includes second identification information, and the second identification information is used to request to use the second identification information as the identification information associated with the first candidate cell (in other words, the second message is further used to request to use the second identification information as the identification information associated with the first candidate cell).

In a possible design, the second identification information is identification information that has been accepted by the second network-side apparatus.

In a possible design, the protocol layer reestablishment includes PDCP layer reestablishment or RLC layer reestablishment, and the protocol layer data recovery includes PDCP layer data recovery.

It may be understood that the communication method according to the fourth aspect corresponds to that according to the third aspect. For beneficial effects of related technical features in the fourth aspect, refer to descriptions in the third aspect. Details are not described again.

According to a fifth aspect, this application provides a communication apparatus. The communication apparatus can implement a function in any one of the first aspect to the fourth aspect. For example, the communication apparatus includes a corresponding module, unit, or means for performing operations in any one of the first aspect to the fourth aspect. The function, the unit, or the means may be implemented by software, hardware, or hardware executing corresponding software.

In a possible design, the communication apparatus includes a processing unit and a communication unit. The communication unit may be configured to receive/send a signal, to implement communication between the communication apparatus and another apparatus. The processing unit may be configured to perform some internal operations of the communication apparatus. Functions performed by the processing unit and the communication unit may correspond to the operations in any one of the first aspect to the fourth aspect.

In a possible design, the communication apparatus includes a processor, and the processor may be configured to be coupled to a memory. The memory may store a necessary computer program or instructions for implementing the function in any one of the first aspect to the fourth aspect. The processor may execute the computer program or the instructions stored in the memory. When the computer program or the instructions are executed, the communication apparatus is enabled to implement the method in any possible design or implementation of the first aspect to the fourth aspect.

In a possible design, the communication apparatus includes a processor and a memory, and the memory may store a computer program or instructions necessary for implementing the function in any one of the first aspect to the fourth aspect. The processor may execute the computer program or the instructions stored in the memory. When the computer program or the instructions are executed, the communication apparatus is enabled to implement the method in any possible design or implementation of the first aspect to the fourth aspect.

In a possible design, the communication apparatus includes a processor and an interface circuit. The processor is configured to: communicate with another apparatus through the interface circuit, and perform the method in any possible design or implementation of the first aspect to the fourth aspect.

It may be understood that in the fifth aspect, the processor may be implemented by hardware, or may be implemented by software. When the processor is implemented by the hardware, the processor may be a logic circuit, an integrated circuit, or the like. When the processor is implemented by the software, the processor may be a general-purpose processor, and is implemented by reading software code stored in a memory. In addition, there may be one or more processors, and one or more memories. The memory may be integrated with the processor, or the memory and the processor are disposed separately. In a specific implementation process, the memory and the processor may be integrated into a same chip, or may be disposed on different chips. A type of the memory and a manner in which the memory and the processor are disposed are not limited in embodiments of this application.

According to a sixth aspect, this application provides a communication system, where the communication system includes a first network-side apparatus and a terminal-side apparatus, the first network-side apparatus is configured to perform the method according to the first aspect, and the terminal-side apparatus is configured to perform the method according to the second aspect.

Alternatively, the communication system includes a first network-side apparatus and a second network-side apparatus, where the first network-side apparatus is configured to perform the method according to the third aspect, and the second network-side apparatus is configured to perform the method according to the fourth aspect.

According to a seventh aspect, this application provides a computer-readable storage medium. The computer storage medium stores computer-readable instructions. When a computer reads and executes the computer-readable instructions, the computer is enabled to perform the method in any one of the possible designs of the first aspect to the fourth aspect.

For example, the computer-readable storage medium may be any usable medium that can be accessed by the computer. By way of example but not limitation, the computer-readable medium may include a non-transitory computer-readable medium, a random access memory (random access memory, RAM), a read-only memory (read-only memory, ROM), an electrically erasable programmable read-only memory (electrically EPROM, EEPROM), a CD-ROM or another optical disk storage, a magnetic disk storage medium or another magnetic storage device, or any other medium that can carry or store desired program code in a form of instructions or a data structure and that can be accessed by the computer.

According to an eighth aspect, this application provides a computer program product. When a computer reads and executes the computer program product, the computer is enabled to perform the method in any one of the possible designs of the first aspect to the fourth aspect.

According to a ninth aspect, this application provides a chip (or a chip system). The chip includes a processor, and the processor is coupled to a memory, and is configured to read and execute a software program stored in the memory, to implement the method according to any one of the possible designs of the first aspect to the fourth aspect.

### BRIEF DESCRIPTION OF DRAWINGS

FIG. 1 is a diagram of a communication system applicable to an embodiment of this application;
FIG. 2A is a diagram of a CU-DU split architecture according to an embodiment of this application;
FIG. 2B is a diagram of another CU-DU split architecture according to an embodiment of this application;
FIG. 3 is a diagram of determining a TA of a cell based on UE measurement according to an embodiment of this application;
FIG. 4 is a schematic flowchart corresponding to a communication method according to Embodiment 1 of this application;
FIG. 5 is a schematic flowchart corresponding to a communication method according to Embodiment 2 of this application;
FIG. 6 is a possible example block diagram of an apparatus according to an embodiment of this application;
FIG. 7 is a diagram of a structure of a network-side apparatus according to an embodiment of this application; and
FIG. 8 is a diagram of a structure of a terminal-side apparatus according to an embodiment of this application.

### DESCRIPTION OF EMBODIMENTS

The following describes the technical solutions in embodiments of this application with reference to the accompanying drawings in embodiments of this application. The technical solutions in embodiments of this application may be applied to various communication systems, such as a universal mobile telecommunications system (universal mobile telecommunications system, UMTS), a wireless local area network (wireless local area network, WLAN), a wireless fidelity (wireless fidelity, Wi-Fi) system, a 4th generation (4th generation, 4G) mobile communication system, for example, a long term evolution (long term evolution, LTE) system, a 5th generation (5th generation, 5G) mobile communication system, for example, a new radio (new radio, NR) system, and a future evolved communication system, for example, a 6th generation (6th generation, 6G) mobile communication system.

All aspects, embodiments, or features are presented in this application by describing a system that may include a plurality of devices, components, modules, and the like. It should be appreciated and understood that each system may include another device, component, module, and the like, and/or may not include all devices, components, modules, and the like discussed with reference to the accompanying drawings. In addition, a combination of these solutions may be used.

In addition, in embodiments of this application, terms such as "example" and "for example" are used to give an example, an illustration, or a description. Any embodiment or design scheme described as an "example" in this application should not be explained as being more preferred or having more advantages than another embodiment or design scheme. Exactly, the term "example" is used to present a concept in a specific manner. In embodiments of this application, "of (of)", corresponding/relevant "(corresponding/relevant)", and "corresponding (corresponding)" may be interchangeably used sometimes. It should be noted that meanings expressed by the terms are consistent when differences of the terms are not emphasized.

The communication system and a service scenario described in embodiments of this application are intended to describe the technical solutions in embodiments of this application more clearly, and do not constitute a limitation on the technical solutions provided in embodiments of this application. A person of ordinary skill in the art may learn that: With evolution of a network architecture and emergence of a new service scenario, the technical solutions provided in embodiments of this application are also applicable to similar technical problems.

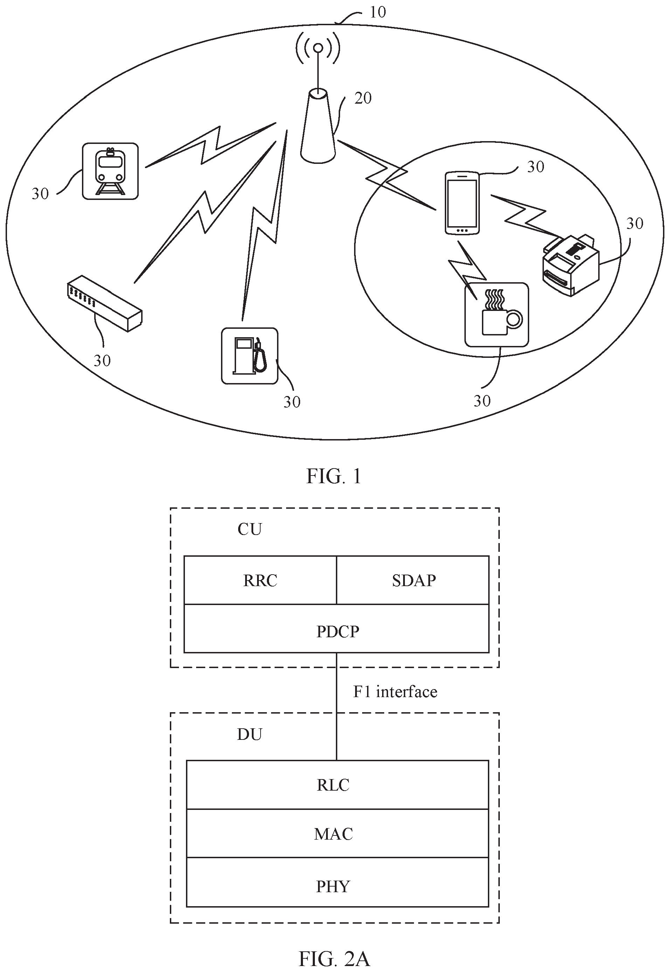

For ease of understanding embodiments of this application, a communication system shown in FIG. 1 is first used as an example to describe in detail a communication system applicable to embodiments of this application. As shown in FIG. 1, the communication system 10 includes one or more network devices 20 and one or more terminals 30. An interface between the network device and the terminal may be a Uu interface (or referred to as an air interface), and data transmission may be performed between the network device 20 and the terminal 30 via an air interface resource. For example, the terminal may be located in communication coverage of one or more cells managed by the network device, and there may be one or more cells (namely, serving cells of the terminal) that provide services for the terminal.

### (1) Terminal

The terminal may be a device that accesses the foregoing communication system and has a wireless transceiver function. The terminal may also be referred to as user equipment (user equipment, UE), a terminal device, a user apparatus, an access terminal, a subscriber unit, a subscriber station, a mobile station (mobile station, MS), a remote station, a remote terminal, a mobile device, a user terminal, a terminal unit, a terminal station, a terminal apparatus, a wireless communication device, a user agent, or a user apparatus.

For example, the terminal in embodiments of this application may be a mobile phone (mobile phone), a personal digital assistant (personal digital assistant, PDA) computer, a laptop computer (laptop computer), a tablet computer (Pad), an uncrewed aerial vehicle, a computer that has a wireless transceiver function, a machine type communication (machine type communication, MTC) terminal, a virtual reality (virtual reality, VR) terminal, an augmented reality (augmented reality, AR) terminal, an internet of things (internet of things, IoT) terminal, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal (for example, a game console, a smart television, a smart speaker, a smart refrigerator, or fitness equipment) in a smart home (smart home), a vehicle-mounted terminal, or an RSU that has a terminal function.

### (2) Network device

The network device is a device that is located on a network side of the foregoing communication system and has a wireless transceiver function. The network device may also be referred to as an access network device, an access network node, a radio access network device, or a radio access network node.

For example, the network device in embodiments of this application may be an access point (access point, AP) in a Wi-Fi system, for example, a home gateway, a router, a server, a switch, or a bridge, a base station, an evolved NodeB (evolved NodeB, eNB), or a radio network controller (radio network controller, RNC), a base station controller (base station controller, BSC), a base transceiver station (base transceiver station, BTS), a home base station, a baseband unit (baseband unit, BBU), a wireless relay node, a wireless backhaul node, or the like, or may be a next generation NodeB (next generation NodeB, gNB) in a 5G system, or a network node that forms a gNB, for example, a road side unit (road side unit, RSU) having a base station function, or may be a satellite or a base station in various forms in the future.

### (3) Protocol layer structure

Communication between the terminal and the network device is performed in accordance with a specific protocol layer structure. For example, a control plane protocol layer structure may include a radio resource control (radio resource control, RRC) layer, a packet data convergence protocol (packet data convergence protocol, PDCP) layer, a radio link control (radio link control, RLC) layer, a media access control (media access control, MAC) layer, and a physical (physical, PHY) layer. A user plane protocol layer structure may include a PDCP layer, an RLC layer, a MAC layer, and a physical layer. In a possible implementation, a service data adaptation protocol (service data adaptation protocol, SDAP) layer may be further included above the PDCP layer. The SDAP layer, the PDCP layer, the RLC layer, the MAC layer, and the physical layer may be collectively referred to as an access stratum. For detailed descriptions of the foregoing protocol layers, refer to related technical specifications of a 3rd generation partnership project (3rd generation partnership project, 3GPP).

Downlink data transmission is used as an example. Downlink data may be correspondingly encapsulated at each layer of the network device. Data received by a specific layer from an upper layer of the layer is considered as a service data unit (service data unit, SDU) of the layer, and becomes a protocol data unit (protocol data unit, PDU) through layer encapsulation to be transmitted to a next layer. For example, data received by the PDCP layer entity from the SDAP layer may be referred to as a PDCP SDU. After encapsulating the PDCP SDU, the PDCP layer entity obtains a PDCP PDU and sends the PDCP PDU to the RLC layer. The PDCP PDU received by the RLC layer entity from the PDCP layer may be referred to as an RLC SDU. After encapsulating the RLC SDU, the RLC layer entity obtains an RLC PDU and sends the RLC PDU to the MAC layer. From a perspective of the terminal, after a physical layer of the terminal receives a transport block from the network device, the transport block may be sequentially submitted from the physical layer to upper layers, and may be correspondingly decapsulated at each layer. In other words, processing performed at each layer of the terminal may be an inverse process of processing performed at each layer of the network device.

### (4) CU-DU split architecture

For example, in some possible network structures, the network device may include one or more central units (central unit, CU) and one or more distributed units (distributed unit, DU). A plurality of DUs may be centrally controlled by one CU. Such an architecture may be referred to as a CU-DU split architecture. For example, an interface between the CU and the DU may be referred to as an F1 interface. A control plane (control panel, CP) interface may be an F1-C interface, and a user plane (user panel, UP) interface may be an F1-U interface.

Processing functions of the CU and the DU may be divided based on protocol layers of a wireless network. For example, as shown in FIG. 2A, functions of a PDCP layer and protocol layers above the PDCP layer are set on the CU, and functions of protocol layers (for example, an RLC layer and a MAC layer) below the PDCP layer are set on the DU. It may be understood that division of the processing functions of the CU and the DU based on the protocol layers is merely an example, and division may alternatively be performed in another manner. For example, functions of protocol layers above the RLC layer are set on the CU, and functions of the RLC layer and protocol layers below the RLC layer are set on the DU. For another example, division may be performed in a manner in which the CU or the DU has functions of more protocol layers. For another example, division may be performed in a manner in which the CU or the DU has some processing functions of the protocol layers. This is not limited in embodiments of this application.

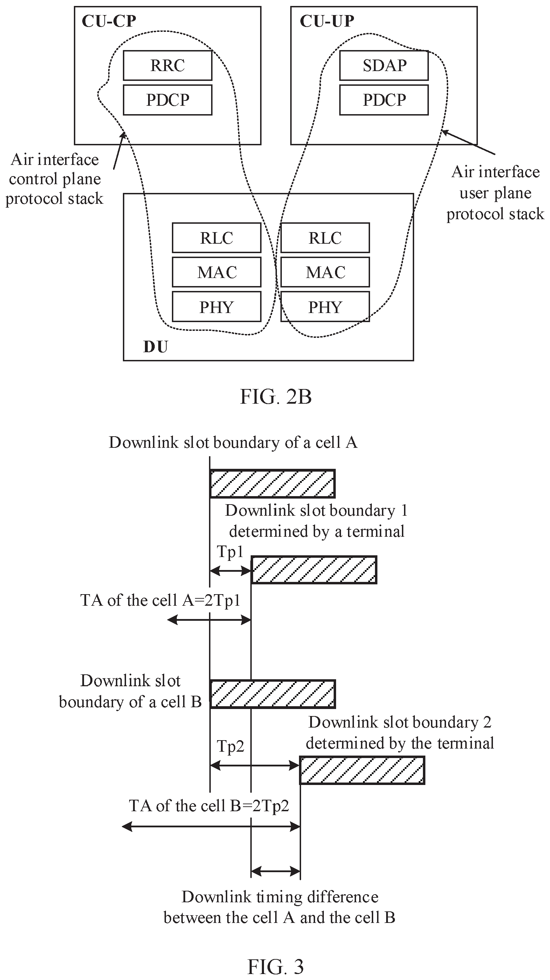

Further, functions of the CU may be implemented by a same entity, or may be implemented by different entities. For example, the functions of the CU may be further divided. To be specific, a control plane and a user plane are separated and implemented by different entities: a control plane CU entity (namely, a CU-CP entity) and a user plane CU entity (namely, a CU-UP entity). The CU-CP entity and the CU-UP entity may be coupled to the DU, to jointly complete a function of a RAN device. An interface between the CU-CP entity and the CU-UP entity may be an E1 interface, an interface between the CU-CP entity and the DU may be an F1-C interface, and an interface between the CU-UP entity and the DU may be an F1-U interface. One DU and one CU-UP may be connected to one CU-CP. Under control of a same CU-CP, one DU may be connected to a plurality of CU-UPs, and one CU-UP may be connected to a plurality of DUs. Under coordination of a plurality of CU-CPs, one CU-UP may alternatively be connected to a plurality of coordinated CU-CPs. This improves flexibility of the CU-CP. FIG. 2B is a diagram of distribution of air interface protocol stacks. As shown in FIG. 2B, for both a user plane and a control plane, an air interface protocol stack may be that an RLC layer, a MAC layer, and a PHY layer are on a DU, and a PDCP layer and protocol layers above the PDCP layer are on a CU.

It should be noted that in the architectures shown in FIG. 2A and FIG. 2B, signaling generated by the CU may be sent to a terminal through the DU, or signaling generated by a terminal may be sent to the CU through the DU. The DU may transparently transmit the signaling to the terminal or the CU by directly encapsulating the signaling at a protocol layer without parsing the signaling. In the following embodiments, if transmission of such signaling between the DU and the terminal is performed, sending or receiving of the signaling by the DU includes such a scenario. For example, signaling at an RRC layer or the PDCP layer is finally processed to be data at the physical layer, and the data is sent to the terminal or is converted from received data at the physical layer. In this architecture, the signaling at the RRC layer or the PDCP layer may also be considered as being sent by the DU, or sent by the DU and a radio frequency apparatus.

It may be understood that a quantity of network devices and a quantity of terminals included in a communication system are not limited in embodiments of this application. In addition to the network device and the terminal, the communication system may further include another device or network element, for example, a core network device or a relay device. This is not limited in embodiments of this application.

The following first explains and describes related terms in embodiments of this application. Unless otherwise specified, these explanations are intended to support meanings of related terms, for ease of understanding of embodiments of this application, and should not be considered as a strict limitation on related terms in the protection scope claimed in this application.

### (1) Cell handover

Cell handover (switch or handover) may be classified into two types. One is cell handover implemented based on a layer 1/layer 2, which may be referred to as layer 1/layer 2 handover or layer 1/layer 2 triggered mobility (L1/L2 triggered mobility, LTM) handover. The other is cell handover implemented based on a layer 3, which may be referred to as layer 3 handover (L3 handover) or common handover. The layer 1 may be a physical layer, the layer 2 may be any one or more of a PDCP layer, an RLC layer, and a MAC layer, and the layer 3 may be an RRC layer. Because the layer 1/layer 2 is lower than the RRC layer (the layer 3) in a protocol stack, the layer 1/layer 2 handover may also be referred to as low-layer handover, bottom-layer handover, or lower-layer handover. A name of a specific handover technology is not limited in this application. In embodiments of this application, the LTM handover is used as an example for description.

### (2) Cell handover scenario

When a terminal is handed over between different cells, there may be a plurality of specific handover scenarios, for example, a scenario 1 and a scenario 2.

Scenario 1: The terminal is handed over from a cell of a network device 1 to a cell of a network device 2. In this case, the network device 1 may be referred to as a source network device, and the network device 2 may be referred to as a target network device. In other words, a source cell and a target cell of the terminal belong to different network devices. Cell handover associated with the scenario 1 may be referred to as inter-gNB handover.

For example, when a CU-DU split architecture is used (for example, one network device includes one CU and a plurality of DUs, the plurality of DUs are centrally controlled by the CU, and each of the plurality of DUs may include one or more cells), the network device 1 includes a CU 1 and a DU 1, and the network device 2 includes a CU 2 and a DU 2. The foregoing scenario 1 may also be described as follows: The terminal is handed over from a cell of the DU 1 controlled by the CU 1 to a cell of the DU 2 controlled by the CU 2. In other words, a source cell and a target cell of the terminal belong to different CUs. Therefore, inter-gNB handover may also be understood as inter-CU (inter-CU) handover.

Scenario 2: The terminal is handed over from a cell of a network device to another cell of the network device. In other words, a source cell and a target cell of the terminal belong to the same network device. Cell handover associated with the scenario 2 is intra-gNB (intra-gNB) handover.

For example, when a CU-DU split architecture is used (for example, the network device includes a CU, a DU 1 controlled by the CU, and a DU 2 controlled by the CU), the scenario 2 may also be referred to as intra-CU (intra-CU) handover. For example, the intra-CU handover includes intra-DU (intra-DU) handover and inter-DU (inter-DU) handover. The intra-DU handover means that the terminal is handed over from a cell of a DU controlled by the CU to another cell of the DU, that is, a source cell and a target cell of the terminal belong to the same DU. The inter-DU handover means that the terminal is handed over from a cell of the DU 1 controlled by the CU to a cell of the DU 2 controlled by the CU, that is, a source cell and a target cell of the terminal belong to different DUs controlled by the same CU.

### (3) Protocol layer reestablishment

In embodiments of this application, the protocol layer reestablishment may be referred to as layer 2 reestablishment or layer 2 reset (L2 reset).

In an example, the protocol layer reestablishment is PDCP layer reestablishment. The PDCP layer reestablishment includes PDCP layer data retransmission and key update. For example, after a terminal is handed over from a source network device to a target network device, if uplink data sent by the terminal to the source network device is not successfully sent, a PDCP layer of the terminal triggers reestablishment. To be specific, after the handover, the uplink data is retransmitted to the target network device using an updated key, to ensure lossless transmission of the uplink data. Similarly, for downlink data, if the downlink data sent by the source network device to the terminal is not successfully sent, the downlink data is retransmitted on the target network device using an updated key after the handover of the terminal, to ensure lossless transmission of the data.

In addition, skipping performing PDCP layer reestablishment may be understood as that the PDCP layer is maintained, that is, a variable (for example, a sequence number (sequence number, SN) variable of a sending or receiving window) of the PDCP layer remains unchanged, and a function of the PDCP layer continues to run.

In another example, the protocol layer reestablishment may alternatively be RLC layer reestablishment. The RLC layer reestablishment may be discarding an RLC SDU, or a segment of an SDU, or an RLC PDU, and/or stopping and resetting an RLC layer timer, for example, a reassembly timer for segmentation.

In addition, skipping performing RLC layer reestablishment may be understood as that an RLC layer is maintained, that is, a variable of the RLC layer remains unchanged, and a function of the RLC layer continues to run.

### (4) Protocol layer data recovery

In embodiments of this application, the protocol layer data recovery may be PDCP layer data recovery, and the PDCP layer data recovery may also be referred to as PDCP layer data retransmission.

For example, after a terminal is handed over from a source network device to a target network device, if uplink data sent by the terminal to the source network device is not successfully sent, a PDCP layer entity of the terminal needs to trigger retransmission, that is, retransmit the uplink data, to ensure lossless transmission of the uplink data. In this scenario, there is no need for key update. Similarly, for downlink data, if the downlink data sent by the source network device to the terminal is not successfully sent, the downlink data is retransmitted, to ensure lossless transmission of the downlink data.

### (5) Timing advance

The timing advance (timing advance, TA) is used for uplink synchronization between a terminal and a network device. The TA may be a cell-level parameter, and each cell has a corresponding TA. For example, the terminal may use a TA of a cell A to send uplink data in the cell A.

A possible manner in which the terminal obtains the TA of the cell A is: determining the TA of the cell A based on UE (or terminal) measurement. Specifically, the terminal may determine downlink timing of the cell A by measuring a downlink reference signal of the cell A, and determine downlink timing of a cell B by measuring a downlink reference signal of the cell B. Then, the terminal may determine a TA of the cell A or the cell B based on a downlink timing difference between the cell A and the cell B.

An example in which a candidate cell is the cell A is used. If downlink slot boundaries of the cell A and the cell B (the cell B may be a serving cell or a source cell of the terminal) are synchronized, as shown in FIG. 3, the TA of the cell A may be determined based on the downlink timing difference according to Formula 1: $TA _ targetcell = TA _ sourcecell + 2 * \left(Tnew-Told\right)$ Formula 1

*TA*_*targetcell* represents the TA of the cell A, *TA*_*sourcecell* represents the TA of the cell B, *Tnew-Told* is the downlink timing difference between the cell A and the cell B, *Tnew* is the downlink timing of the cell A, and *Told* is the downlink timing of the cell B.

Formula 1 may alternatively be changed to: $TA _ targetcell = TA _ sourcecell - 2 * \left(Told-Tnew\right)$

If the downlink slot boundaries of the cell A and the cell B are not synchronized, the TA of the cell A may be determined based on the downlink timing difference according to Formula 2: $TA _ targetcell = TA _ sourcecell + 2 * \left(Tnew-Told\right) + offset$ Formula 2

*offset* represents an offset between the downlink slot boundaries of the cell A and the cell B.

In addition, whether the downlink slot boundaries of the cell A and the cell B are synchronized, and the offset between the downlink slot boundaries of the cell A and the cell B may be indicated by the network device to the terminal. A specific implementation is not limited.

It may be understood that, skipping determining the TA of the cell A based on UE measurement may mean that the terminal does not determine the TA of the cell A in this manner. In this case, optionally, the terminal may determine the TA of the cell A in another manner. For example, the terminal obtains the TA of the cell A by initiating random access. This is not specifically limited.

### (6) Processing manner associated with a candidate cell

The processing manner associated with the candidate cell of a terminal may include: performing protocol layer reestablishment, or performing protocol layer data recovery, or skipping performing protocol layer reestablishment; and/or determining a TA of a first candidate cell based on user equipment UE measurement, or skipping determining a TA of a first candidate cell based on UE measurement.

For example, when the candidate cell of the terminal and a serving cell (or a source cell) of the terminal correspond to a same DU, the processing manner associated with the candidate cell includes skipping performing protocol layer reestablishment. When the candidate cell of the terminal and the source cell of the terminal correspond to different DUs, the processing manner associated with the candidate cell includes performing protocol layer reestablishment or performing protocol layer data recovery.

For another example, when the candidate cell of the terminal and the source cell of the terminal correspond to a same transmission reception point (transmission reception point, TRP) (or a same antenna), the processing manner associated with the candidate cell includes determining the TA of the candidate cell based on the UE measurement. When the candidate cell and the source cell correspond to different TRPs (or different antennas), the processing manner associated with the candidate cell includes skipping determining the TA of the candidate cell based on the UE measurement.

In the foregoing handover scenario 2 (that is, intra-CU handover), a plurality of candidate cells of the terminal correspond to a same CU. The CU may allocate identification information to the plurality of candidate cells based on a topology structure (for example, a relationship between the plurality of candidate cells), and send the identification information to the terminal. For example, the plurality of candidate cells include a cell A and a cell B. After the terminal is handed over to the cell B, the terminal may determine, based on identification information associated with the cell B (that is, the source cell) and identification information associated with the cell A (that is, the candidate cell), a processing manner associated with the cell A. For example, if the terminal determines that the identification information associated with the cell B is the same as the identification information associated with the cell A, the terminal determines that the processing manner associated with the cell A includes: skipping performing protocol layer reestablishment, and/or determining a TA of the candidate cell based on UE measurement. If the terminal determines that the identification information associated with the cell B is different from the identification information associated with the cell A, the terminal determines that the processing manner associated with the cell A includes: performing protocol layer reestablishment or performing protocol layer data recovery, and/or skipping determining a TA of the candidate cell based on UE measurement.

For example, if the CU determines that the cell A and the cell B correspond to a same DU, the CU allocates same identification information to the cell A and the cell B, where the identification information may be referred to as a layer 2 no reestablishment identifier (L2 NO reset ID), and sends the identification information to the terminal. Correspondingly, after the terminal is handed over to the cell B, the terminal determines, based on the L2 NO reset ID associated with the cell A and the L2 NO reset ID associated with the cell B, that the processing manner associated with the cell A includes skipping performing protocol layer reestablishment.

For another example, if the CU determines that the cell A and the cell B correspond to a same TRP, the CU allocates same identification information to the cell A and the cell B, where the identification information may be referred to as a UE measurement ID, and sends the identification information to the terminal. Correspondingly, after the terminal is handed over to the cell B, the terminal determines, based on the UE measurement ID associated with the cell B and the UE measurement ID associated with the cell A, that the processing manner associated with the cell A includes determining the TA of the candidate cell based on UE measurement.

However, in the foregoing handover scenario 1 (that is, inter-CU handover), a plurality of candidate cells of the terminal correspond to a plurality of CUs. For example, the plurality of candidate cells of the terminal include a cell A to a cell G, where the cell A to the cell D correspond to a CU 1, and the cell E to the cell G correspond to a CU 2. In this case, the CU 1 allocates identification information to the cell A to the cell D based on a relationship between the cells A to D, and the CU 2 allocates identification information to the cell E to the cell G based on the relationship between the cells E to G. Because different CUs allocate identification information to candidate cells based on respective topology structures, and the different CUs are unaware of the topology structures of each other, this may cause conflicts in the identification information allocated by the different CUs. For example, an L2 NO reset ID allocated by the CU 1 to the cell A is the same as an L2 NO reset ID allocated by the CU 2 to the cell E, but the cell A and the cell E correspond to different DUs of different CUs. As a result, the processing manner associated with the cell A determined by the terminal based on the L2 NO reset ID associated with the cell E (that is, the source cell) and the L2 NO reset ID associated with the cell A is improper or inaccurate, and consequently, handover of the terminal to the cell A is affected.

Based on this, related implementations in an inter-CU handover scenario (or an inter-gNB handover scenario) are studied in embodiments of this application. For example, an embodiment of this application provides a communication method, to accurately determine a processing manner associated with a candidate cell, thereby facilitating handover of a terminal to the candidate cell. The communication method provided in embodiments of this application relates to a terminal-side apparatus and at least one network-side apparatus (for example, a first network-side apparatus, a second network-side apparatus, and a third network-side apparatus). The "terminal-side apparatus" may be a terminal, or may be a component in the terminal, for example, a chip or a chip system disposed in the terminal. The "network-side apparatus" may be a network device, or may be a component in the network device, for example, a chip or a chip system disposed in the network device. The network device may be an access network node, or the network device is a CU of an access network node, or the network device includes a CU of an access network node and a DU of the access network node. In embodiments of this application, an example in which "the terminal-side apparatus is a terminal, and the network-side apparatus is a network device (that is, the first network-side apparatus is a first network device, the second network-side apparatus is a second network device, and the third network-side apparatus is a third network device)" is used for description.

For example, the communication method provided in embodiments of this application includes two possible solutions (solution 1 and solution 2). The two solutions are briefly described herein first. The description herein is merely intended to make embodiments of this application easier to understand, and should not be construed as a strict limitation on the technical features in the protection scope claimed in this application. In other words, not all the technical features described herein are necessary technical features.

Solution 1: After receiving identification information (for example, identification information 1) associated with a candidate cell and allocated by a candidate network device, a first network device (initial source network device) may determine identification information 1' based on the identification information 1, where the identification information 1' is different from the identification information 1. In other words, the first network device may reallocate the identification information associated with the candidate cell.

Solution 2: A first network device (initial source network device) sends recommended identification information to a candidate network device. The candidate network device may accept the identification information as identification information associated with a candidate cell, or may reject the identification information as identification information associated with a candidate cell. If the candidate network device rejects the identification information as the identification information associated with the candidate cell, the candidate network device may select accepted identification information as the identification information associated with the candidate cell.

According to the foregoing solution 1 or solution 2, a conflict between identification information allocated by different candidate network devices can be avoided, so that the terminal can accurately determine, based on the identification information associated with the candidate cell, a processing manner associated with the candidate cell.

The following describes the communication method provided in embodiments of this application in detail with reference to Embodiment 1 and Embodiment 2.

### Embodiment 1

In Embodiment 1, the solution 1 is described.

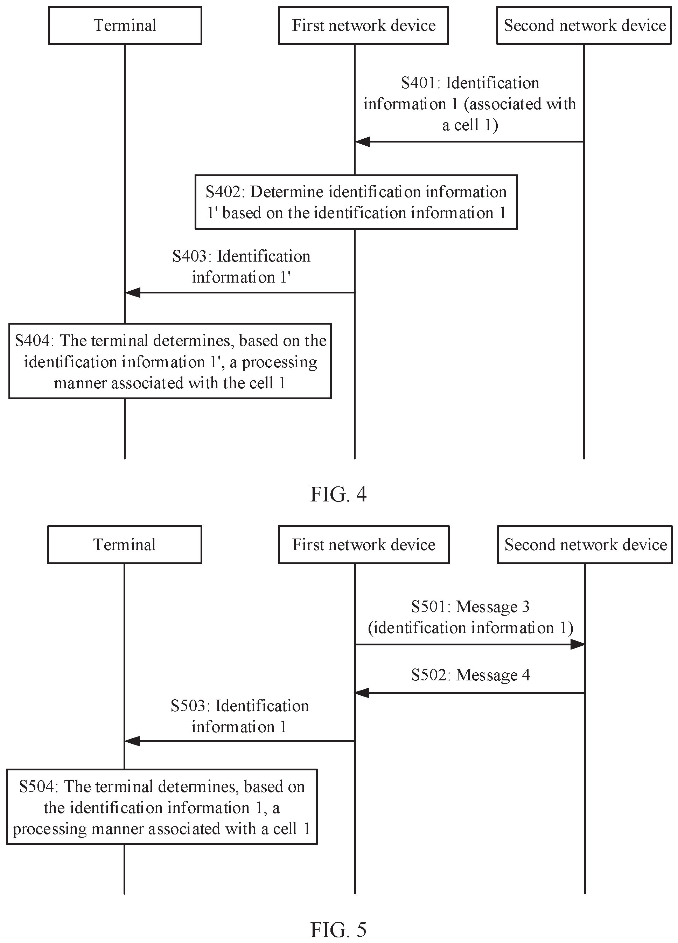

FIG. 4 is a schematic flowchart corresponding to a communication method according to Embodiment 1 of this application. As shown in FIG. 4, the procedure may include the following steps.

S401: A second network device sends identification information 1 for a terminal to a first network device, where the identification information 1 is associated with a cell 1 managed by the second network device. Correspondingly, the first network device receives the identification information 1 for the terminal from the second network device.

For example, the first network device is an initial source network device of the terminal, and the initial source network device determines, based on a measurement result reported by the terminal, to initiate an LTM configuration. For example, the first network device determines that the cell 1, a cell 2, a cell 3, a cell 4, and a cell 5 are candidate cells of the terminal. The cell 1 and the cell 2 are cells managed by the second network device, the cell 3 and the cell 4 are cells managed by a third network device, the cell 5 is a cell managed by the first network device, and the cell 5 may be a current serving cell (that is, a source cell) of the terminal.

For the cell 1, the first network device sends a message 1 (subsequently referred to as a request message 1) to the second network device, where the request message 1 is used to request an LTM configuration of the cell 1, the request message 1 includes LTM indication information and a cell global identifier (cell global identifier, CGI) of the cell 1, and the request message 1 may be a handover request (handover request) message. Optionally, the request message 1 is further used to request configuration information of a processing manner associated with the cell 1. For example, the request message 1 includes information a and/or information b, where the information a is used to request configuration information of L2 NO reset, and the information b is used to request configuration information of UE measurement of a TA. For another example, the request message 1 includes information c, where the information c is used to request configuration information of L2 NO reset and configuration information of UE measurement of a TA.

Correspondingly, after receiving the request message 1, if the second network device accepts the cell 1 as the candidate cell of the terminal, the second network device determines (or generates) the identification information 1, and sends a response message 1 to the first network device, where the response message 1 includes the LTM configuration of the cell 1 and the identification information 1. Optionally, the response message 1 may further include other possible information. This is not specifically limited. The identification information 1 is used to determine the processing manner associated with the cell 1, that is, the identification information 1 is used by the terminal to determine, when a target cell is the cell 1, whether to perform protocol layer reestablishment, and/or used by the terminal to determine whether to determine a TA of the cell 1 based on UE measurement. For example, the identification information 1 is an L2 NO reset ID and/or a UE measurement ID. The LTM configuration of the cell 1 includes a transmission configuration indication (transmission configuration indication, TCI) state configuration, a cell group (cell group) configuration (for example, group identifier information corresponding to the cell 1), and may further include another possible configuration. This is not specifically limited.

In addition, after receiving the request message 1, if the second network device rejects the cell 1 as the candidate cell of the terminal, the second network device does not need to determine the identification information 1, and does not need to send the LTM configuration of the cell 1 to the first network device. In this embodiment of this application, an example in which "the first network device accepts the cell 1 as the candidate cell of the terminal" is used for description.

For the cell 2, the first network device sends a request message 2 to the second network device, where the request message 2 is used to request an LTM configuration of the cell 2. For the request message 2, refer to the foregoing descriptions of the request message 1. Correspondingly, after receiving the request message 2, if the second network device accepts the cell 2 as the candidate cell of the terminal, the second network device determines identification information 2, where the identification information 2 is associated with the cell 2, and sends a response message 2 to the first network device, where the response message 2 includes the LTM configuration of the cell 2 and the identification information 2. For the response message 2, refer to the foregoing descriptions of the response message 1.

The identification information 2 and the identification information 1 may be the same or may be different. For example, if the second network device determines, based on its topology information, that the cell 1 and the cell 2 correspond to a same DU or a same TRP, the determined identification information 2 is the same as the identification information 1; or if the second network device determines, based on its topology information, that the cell 1 and the cell 2 correspond to different DUs or different TRPs, the determined identification information 2 is different from the identification information 1.

It may be understood that the request message 1 and the request message 2 may be different messages, or may be a same message. To be specific, the first network device may request the LTM configurations of the cell 1 and the cell 2 from the second network device via one message. For other similar cases, refer to this for understanding.

For the cell 3, the first network device sends a request message 3 to the third network device, where the request message 3 is used to request an LTM configuration of the cell 3. For the request message 3, refer to the foregoing descriptions of the request message 1. Correspondingly, after receiving the request message 3, if the third network device accepts the cell 3 as the candidate cell of the terminal, the third network device determines identification information 3, where the identification information 3 is associated with the cell 3, and sends a response message 3 to the first network device, where the response message 3 includes the LTM configuration of the cell 3 and the identification information 3. For the response message 3, refer to the foregoing descriptions of the response message 1.

For the cell 4, the first network device sends a request message 4 to the third network device, where the request message 4 is used to request an LTM configuration of the cell 4. For the request message 4, refer to the foregoing descriptions of the request message 1. Correspondingly, after receiving the request message 4, if the third network device accepts the cell 4 as the candidate cell of the terminal, the third network device determines identification information 4, where the identification information 4 is associated with the cell 4, and sends a response message 4 to the first network device, where the response message 4 includes the LTM configuration of the cell 4 and the identification information 4. For the response message 4, refer to the foregoing descriptions of the response message 1.

The identification information 4 and the identification information 4 may be the same or may be different. For example, if the third network device determines, based on topology information of the third network device, that the cell 3 and the cell 4 correspond to a same DU or a same TRP, the determined identification information 4 is the same as the identification information 3; or if the third network device determines, based on topology information of the third network device, that the cell 3 and the cell 4 correspond to different DUs or different TRPs, the determined identification information 4 is different from the identification information 3.

For the cell 5, the first network device determines an LTM configuration and identification information 5 of the cell 5, where the identification information 5 is associated with the cell 5.

It may be understood that, for functions of the identification information 2 to the identification information 5, refer to the descriptions of the identification information 1. A quantity of candidate cells of the terminal is not limited in embodiments of this application. The foregoing uses five candidate cells as an example for description.

S402: The first network device determines identification information 1' based on the identification information 1, where the identification information 1' is different from the identification information 1.

Two possible implementations are described herein with reference to Implementation 1 and Implementation 2.

### (1) Implementation 1

In Implementation 1, that the identification information 1' is different from the identification information 1 may mean that a value of the identification information 1' is different from that of the identification information 1. In other words, the first network device modifies the identification information 1 to obtain the identification information 1'. In this case, the identification information 1' and the identification information 1 are different values of a same parameter. For example, the identification information 1' and the identification information 1 are different values of the L2 NO reset ID associated with the cell 1, or the identification information 1' and the identification information 1 are different values of the UE measurement ID associated with the cell 1.

For example, if the first network device determines that the identification information 1 is used by a candidate network device other than the second network device, for example, the identification information 1 is the same as identification information (for example, the identification information 3, the identification information 4, or the identification information 5) sent by the candidate network device other than the second network device, the first network device modifies the identification information 1 to obtain the identification information 1'. For example, if the identification information 1 is the same as the identification information 3, the first network device modifies the identification information 1 to obtain the identification information 1', and does not modify the identification information 3; or the first network device modifies the identification information 3 to obtain identification information 3', and does not modify the identification information 1. In addition, if the first network device determines that the identification information 1 is not used by a candidate network device other than the second network device, for example, the identification information 1 is different from identification information sent by a candidate network device other than the second network device, the first network device does not modify the identification information 1.

The foregoing uses the identification information 1 as an example for description. For other identification information (for example, the identification information 2 to the identification information 5), refer to the descriptions of the identification information 1. In embodiments of this application, the following uses an example in which "the first network device modifies the identification information 1 to obtain the identification information 1', modifies the identification information 2 to obtain identification information 2', modifies the identification information 3 to obtain identification information 3', and does not modify the identification information 4 and the identification information 5" for description.

### (2) Implementation 2

In Implementation 1, that the identification information 1' is different from the identification information 1 may mean that the identification information 1' includes the identification information 1 and information corresponding to the cell 1. In other words, the identification information 1' includes two parts: one part is the identification information 1, and the other part is the information corresponding to the cell 1. The information corresponding to the cell 1 indicates a cell group in which the cell 1 is located, or indicates the first network device. For example, the information corresponding to the cell 1 may include the group identifier information corresponding to the cell 1, or identification information (for example, a node ID) of the second network device, or other possible information. For example, the information corresponding to the cell 1 is newly defined information, and the information is determined (or generated) by the first network device. In this case, a part (for example, the identification information 1) of the identification information 1' is determined by the second network device, and the other part (for example, the information corresponding to the cell 1) is determined by the first network device.

For example, if the first network device determines that the identification information 1 is used by a candidate network device other than the second network device, the first network device determines the identification information 1' based on the identification information 1. Alternatively, the first network device directly determines the identification information 1' based on the identification information 1, and does not need to determine whether the identification information 1 is used by a candidate network device other than the second network device. In this embodiment of this application, an example in which the first network device directly determines the identification information 1' based on the identification information 1 is used for description.

The foregoing uses the identification information 1 as an example for description. For other identification information (for example, the identification information 2 to the identification information 5), refer to the descriptions of the identification information 1. For example, the first network device separately determines identification information 2' (including the identification information 2 and information corresponding to the cell 2), identification information 3' (including the identification information 3 and information corresponding to the cell 3), identification information 4' (including the identification information 4 and information corresponding to the cell 4), and identification information 5' (including the identification information 5 and information corresponding to the cell 5).

S403: The first network device sends a message 2 to the terminal, where the message 2 includes the identification information 1'. Correspondingly, the terminal receives the message 2.

For example, the message 2 may be an RRC message, for example, an RRC reconfiguration message.

For Implementation 1, the RRC reconfiguration message includes the identification information 1', the identification information 2', the identification information 3', the identification information 4, and the identification information 5. The identification information 1' is associated with the cell 1, the identification information 2' is associated with the cell 2, the identification information 3' is associated with the cell 3, the identification information 4 is associated with the cell 4, and the identification information 5 is associated with the cell 5.

For Implementation 2, the RRC reconfiguration message includes the identification information 1', the identification information 2', the identification information 3', the identification information 4', and the identification information 5'. The identification information 1' is associated with the cell 1, the identification information 2' is associated with the cell 2, the identification information 3' is associated with the cell 3, the identification information 4' is associated with the cell 4, and the identification information 5' is associated with the cell 5.

Optionally, the RRC reconfiguration message further includes the LTM configuration of the cell 1, the LTM configuration of the cell 2, the LTM configuration of the cell 3, the LTM configuration of the cell 4, and the LTM configuration of the cell 5, and may further include other possible information. This is not specifically limited.

In addition, after receiving the RRC reconfiguration message, the terminal may send an RRC reconfiguration complete message to the first network device.

S404: The terminal determines, based on the identification information 1', the processing manner associated with the cell 1.

For example, the terminal sends a measurement report of the cell 1 to the first network device. In response to the measurement report, the first network device sends a handover command message (referred to as a handover command message 1) to the terminal, where the handover command message 1 instructs the terminal to perform handover to the cell 1. Optionally, the first network device further sends a cell switch notification (cell switch Notify) message to the second network device, where the cell switch notification message includes an identifier of the target cell (that is, the cell 1), and the cell switch notification message indicates that the handover command message has been sent to the terminal. The handover command message may be a MAC control element (control element, CE).

After receiving the handover command message 1, the terminal determines, based on the identification information 1', the processing manner associated with the cell 1, performs processing corresponding to the processing manner to perform handover to the cell 1 (referred to as first handover), and communicates with the second network device based on the LTM configuration of the cell 1. It may be understood that, in another example, before receiving the handover command message 1, the terminal may alternatively determine, based on the identification information 1', the processing manner associated with the cell 1. A specific occasion on which the terminal determines the processing manner associated with the cell 1 is not limited in embodiments of this application.

The following describes an implementation in which "the terminal determines, based on the identification information 1', the processing manner associated with the cell 1".

For Implementation 1, the terminal determines, based on identification information associated with the source cell (for example, the identification information 5 associated with the cell 5) and the identification information 1', the processing manner associated with the cell 1.

For example, when the identification information associated with the source cell is the same as the identification information 1', it is determined that the processing manner associated with the cell 1 is skipping performing protocol layer reestablishment; or when the identification information associated with the source cell is different from the identification information 1', it is determined that the processing manner associated with the cell 1 is performing protocol layer reestablishment or performing protocol layer data recovery; and/or, when the identification information associated with the source cell is the same as the identification information 1', it is determined that the processing manner associated with the cell 1 is determining the TA of the cell 1 based on the UE measurement; or when the identification information associated with the source cell is different from the identification information 1', it is determined that the processing manner associated with the cell 1 is skipping determining the TA of the cell 1 based on the UE measurement.

For Implementation 2, the terminal determines, based on identification information associated with the source cell (for example, the identification information 5 associated with the cell 5), information corresponding to the source cell (for example, information corresponding to the cell 5), and the identification information 1', the processing manner associated with the cell 1.

For example, when the information corresponding to the source cell is the same as the information corresponding to the cell 1, and the identification information associated with the source cell is the same as the identification information 1, it is determined that the processing manner associated with the cell 1 is skipping performing protocol layer reestablishment; or when the information corresponding to the source cell is different from the information corresponding to the cell 1, or the identification information associated with the source cell is different from the identification information 1, it is determined that the processing manner associated with the cell 1 is performing protocol layer reestablishment or performing protocol layer data recovery; and/or, when the information corresponding to the source cell is the same as the information corresponding to the cell 1, and the identification information associated with the source cell is the same as the identification information 1, it is determined that the processing manner associated with the cell 1 is determining the TA of the cell 1 based on the UE measurement; or when the information corresponding to the source cell is different from the information corresponding to the cell 1, or the identification information associated with the source cell is different from the identification information 1, it is determined that the processing manner associated with the cell 1 is skipping determining the TA of the cell 1 based on the UE measurement.

Optionally, after the terminal is handed over to the cell 1 based on the handover command message 1, the terminal may determine, based on the identification information 3' (that is, the identification information associated with the cell 3 that is previously received via the RRC reconfiguration message), a processing manner associated with the cell 3. For example, the terminal sends a measurement report of the cell 3 to the second network device. In response to the measurement report, the second network device sends a handover command message 2 to the terminal, where the handover command message 2 instructs the terminal to perform handover to the cell 3. Optionally, the second network device further sends a cell switch notification (cell switch Notify) message to the third network device, where the cell switch notification message includes an identifier of the target cell (that is, the cell 3), and the cell switch notification message indicates that the handover command message has been sent to the terminal.

After receiving the handover command message 2, the terminal determines, based on the identification information 3', the processing manner associated with the cell 3, performs processing corresponding to the processing manner to perform handover to the cell 3 (referred to as second handover), and communicates with the second network device based on the LTM configuration of the cell 3. For example, the terminal determines, based on identification information associated with the source cell (for example, the identification information 1' associated with the cell 1) and the identification information 3', the processing manner associated with the cell 3.

In this embodiment of this application, after performing the second handover, the terminal may further continue to perform third handover, fourth handover, and the like. For specific implementation of subsequent handover, refer to the descriptions of the first handover.

It may be understood that, in Embodiment 1, "cell 1" may be replaced with "first candidate cell", "identification information 1" may be replaced with "first identification information", "identification information 1'" may be replaced with "second identification information", the message 1 may also be replaced with "first message" (the first message is used to request configuration information of a processing manner), and the message 2 may be replaced with "second message" (the second message includes the first identification information and information corresponding to a first candidate cell).

According to the foregoing method, in an inter-CU handover scenario, a conflict between identification information allocated by different candidate network devices can be avoided, so that the terminal can accurately determine, based on identification information associated with the candidate cell, a processing manner associated with the candidate cell, thereby facilitating handover of the terminal to the candidate cell. This avoids a handover failure caused by an inaccurate processing manner associated with the determined candidate cell.

### Embodiment 2

In Embodiment 2, the solution 2 is described.

FIG. 5 is a schematic flowchart associated with a communication method according to Embodiment 2 of this application. As shown in FIG. 5, the procedure may include the following steps.

S501: A first network device sends a message 3 to a second network device, where the message 3 is used to request to use identification information 1 as identification information associated with a cell 1. Correspondingly, the second network device receives the message 3.

S502: In response to the message 3, the second network device sends a message 4 to the first network device. Correspondingly, the first network device receives the message 4.

For example, the first network device is an initial source network device of a terminal, and the initial source network device determines, based on a measurement result reported by the terminal, to initiate an LTM configuration. For example, the first network device determines that the cell 1, a cell 2, a cell 3, a cell 4, and a cell 5 are candidate cells of the terminal. The cell 1 and the cell 2 are cells managed by the second network device, and the cell 3 and the cell 4 are cells managed by a third network device. Further, the first network device may allocate recommended identification information to each candidate cell. For example, the identification information allocated by the first network device to the cell 1 is the identification information 1, the identification information allocated to the cell 2 is identification information 2, the identification information allocated to the cell 3 is identification information 3, and the identification information allocated to the cell 4 is identification information 4.
(1) The cell 1 is used as an example to describe interaction between the first network device and the second network device.

The first network device sends the message 3 (subsequently referred to as a request message 1) to the second network device, where the request message 1 includes the identification information 1, and the request message 1 is used to request (or recommend) to use the identification information 1 as the identification information associated with the cell 1. Optionally, the request message 1 is further used to request an LTM configuration of the cell 1, the request message 1 includes LTM indication information and a CGI of the cell 1, and the request message 1 may be a handover request message.

Correspondingly, after receiving the request message 1, if the second network device accepts the identification information 1 as the identification information associated with the cell 1, the second network device sends the message 4 (subsequently referred to as a response message 1a) to the first network device, where the response message 1a indicates acceptance of using the identification information 1 as the identification information associated with the cell 1, and the response message 1 may include the identification information 1 and the LTM configuration of the cell 1. The identification information associated with the cell 1 is used to determine a processing manner associated with the cell 1.

Alternatively, if the second network device rejects the identification information 1 as the identification information associated with the cell 1, the second network device sends a response message 1b to the first network device, where the response message 1b indicates rejection of using the cell 1 as a candidate cell of the terminal, that is, the response message 1b does not include the LTM configuration of the cell 1.

Alternatively, if the second network device rejects the identification information 1 as the identification information associated with the cell 1, the second network device sends a response message 1c to the first network device, where the response message 1c indicates rejection of using the identification information 1 as the identification information associated with the cell 1, and the response message 1c is further used to request to use identification information a as the identification information associated with the cell 1. Correspondingly, after receiving the response message 1c, the first network device may send a request message 1' (that is, a handover request message) to the second network device, where the request message 1' includes the identification information a, and the request message 1' is used to request to use the identification information a as the identification information associated with the cell 1. After receiving the request message 1', the second network device sends a response message 1' to the first network device, where the response message 1' indicates acceptance of using the identification information a as the identification information associated with the cell 1, and the response message 1' may include the identification information a and the LTM configuration of the cell 1.

Herein, the cell 1 is used as an example for description, and processing for another cell (that is, the cell 2 to the cell 4) may be similar.

The identification information a may be identification information that has been accepted by the second network device. For example, the first network device first sends a request message 2 to the second network device, where the request message 2 includes the identification information 2, and the request message 1 is used to request to use the identification information 2 as identification information associated with the cell 2. Correspondingly, the second network device accepts the identification information 2 as the identification information associated with the cell 2, and sends a response message 2 to the first network device, where the response message 2 indicates acceptance of using the identification information 2 as the identification information associated with the cell 2, and the response message 2 includes the identification information 2 and an LTM configuration associated with the cell 2. Then, the first network device sends the request message 1 to the second network device, where the request message 1 is used to request to use the identification information 1 as the identification information associated with the cell 1. The second network device determines, based on its topology information, that the cell 1 and the cell 2 correspond to a same DU or a same TRP, but the identification information 1 is different from the identification information 2. Therefore, the second network device may reject the identification information 1 as the identification information associated with the cell 1, and sends a response message 1c to the first network device, where the response message 1c indicates rejection of using the identification information 1 as the identification information associated with the cell 1, and is further used to request to use the identification information 2 as the identification information associated with the cell 1, that is, use the identification information a as the identification information 2.

(2) The identification information allocated by the first network device to the candidate cell is described.

The first network device allocates different identification information to candidate cells of different network devices. For example, the identification information 3 (or the identification information 4) is different from the identification information 1, and is also different from the identification information 2. The first network device may allocate same or different identification information to different candidate cells of a same network device. For example, the second network device sends the topology information to the first network device. If the topology information indicates that the cell 1 and the cell 2 correspond to a same DU, a same TRP, or same identification information, the first network device allocates (or determines) same identification information (that is, the identification information 1 and the identification information 2 are the same) to the cell 1 and the cell 2 based on the topology information. If the topology information indicates that the cell 1 and the cell 2 correspond to different DUs, different TRPs, or different identification information, the first network device allocates different identification information (that is, the identification information 1 and the identification information 2 are different) to the cell 1 and the cell 2 based on the topology information.

Optionally, for example, the second network device accepts the identification information 1 as the identification information associated with the cell 1. In this case, the foregoing method further includes S503 and S504.

S503: The first network device sends, to the terminal, the identification information 1 associated with the cell 1. Correspondingly, the terminal receives the identification information 1.

S504: The terminal determines, based on the identification information 1, the processing manner associated with the cell 1.

For S503 and S504, refer to the descriptions of S403 and S404 in Embodiment 1. The foregoing focuses on differences between Embodiment 2 and Embodiment 1. For content other than the differences, mutual reference may be made between Embodiment 2 and Embodiment 1.

It may be understood that, in Embodiment 2, "cell 1" may be replaced with "first candidate cell", "identification information 1" may be replaced with "first identification information", "identification information a" may be replaced with "second identification information", the message 3 may also be replaced with "first message" (the first message is used to request to use the first identification information as identification information associated with the first candidate cell), and the message 4 may also be replaced with "second message" (the second message indicates acceptance or rejection of using the first identification information as the identification information associated with the first candidate cell).

According to the foregoing method, in an inter-CU handover scenario, a conflict between identification information allocated by different candidate network devices can be avoided, so that the terminal can accurately determine, based on identification information associated with the candidate cell, a processing manner associated with the candidate cell, thereby facilitating handover of the terminal to the candidate cell. This avoids a handover failure caused by an inaccurate processing manner associated with the determined candidate cell.

For the foregoing plurality of embodiments, it may be understood that:
(1) In any embodiment of the present invention, "performing B (behavior) in response to A (message)" may be understood as "performing B based on A", or may be understood as "performing B because of A". In any embodiment of the present invention, if A is associated with B, and B is associated with C, it may be considered that A is associated with C. "Associated with" and "corresponding to" may be replaced with each other.
(2) In embodiments of this application, unless otherwise specified or there is a logic conflict, terms and/or descriptions in different embodiments are consistent and may be mutually referenced, and technical features in the different embodiments may be combined based on an internal logical relationship thereof, to form a new embodiment. In addition, in a same embodiment, different implementations or different examples may reference or refer to each other.
(3) Various numerals in this application are for differentiation merely for ease of description, but are not for limiting the scope of this application. Step numbers in the foregoing flowcharts are merely examples of execution procedures, and do not constitute a limitation on an execution sequence of the steps. In other words, the step numbers do not mean the execution sequence, and the execution sequence of the steps should be determined based on a function and internal logic of the steps. In addition, not all steps shown in each flowchart are mandatory, and some steps may be added or deleted for each flowchart based on an actual requirement.

The solutions provided in embodiments of this application are mainly described above from a perspective of interaction between the network-side apparatus and the terminal-side apparatus. It may be understood that, to implement the foregoing functions, the network-side apparatus or the terminal-side apparatus may include a corresponding hardware structure and/or a software module for implementing each function. A person skilled in the art should be easily aware that, in combination with units and algorithm steps of the examples described in embodiments disclosed in this specification, embodiments of this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, division into functional units may be performed on the network-side apparatus and the terminal-side apparatus based on the foregoing method examples. For example, each functional unit may be obtained through division based on each corresponding function, or two or more functions may be integrated into one unit. The integrated unit may be implemented in a form of hardware, or may be implemented in a form of a software functional unit.

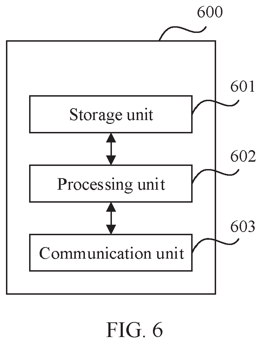

When the integrated unit is used, FIG. 6 is a possible example block diagram of an apparatus according to an embodiment of this application. As shown in FIG. 6, the apparatus 600 may include a processing unit 602 and a communication unit 603. The processing unit 602 is configured to control and manage actions of the apparatus 600. The communication unit 603 is configured to support the apparatus 600 in communicating with another device. Optionally, the communication unit 603 is also referred to as a transceiver unit, and may include a receiving unit and/or a sending unit, which are respectively configured to perform a receiving operation and a sending operation. The apparatus 600 may further include a storage unit 601, configured to store program code and/or data of the apparatus 600.
(1) The apparatus 600 may be the network-side apparatus (for example, the first network device) in the foregoing embodiments. The processing unit 602 may support the apparatus 600 in performing actions of the first network device in the foregoing method examples. Alternatively, the processing unit 602 mainly performs an internal action of the first network device in the method examples, and the communication unit 603 may support communication between the apparatus 600 and another device.

In an embodiment, the communication unit 603 is configured to receive, from a second network-side apparatus, first identification information for a terminal-side apparatus, where the first identification information is associated with a first candidate cell managed by the second network-side apparatus. The processing unit 602 is configured to determine second identification information based on the first identification information, where the second identification information is different from the first identification information. The communication unit 603 is further configured to send the second identification information to the terminal-side apparatus, where the second identification information is used to determine a processing manner associated with the first candidate cell, where the processing manner includes: performing protocol layer reestablishment, or performing protocol layer data recovery, or skipping performing protocol layer reestablishment; and/or determining a TA of the first candidate cell based on user equipment UE measurement, or skipping determining a TA of the first candidate cell based on UE measurement.

In a possible design, the first identification information is information determined by the second network-side apparatus to determine the processing manner.

In a possible design, that the second identification information is different from the first identification information includes: a value of the second identification information is different from that of the first identification information; or the second identification information includes the first identification information and information corresponding to the first candidate cell.

In a possible design, the communication unit 603 is further configured to receive third identification information from a third network-side apparatus, where the third identification information is associated with a second candidate cell. The processing unit 602 is specifically configured to determine the second identification information when the first identification information is the same as the third identification information.

In a possible design, the communication unit 603 is further configured to send a first message to the second network-side apparatus, where the first message is used to request configuration information of the processing manner.

(2) The apparatus 600 may be the terminal-side apparatus (for example, the terminal) in the foregoing embodiments. The processing unit 602 may support the apparatus 600 in performing the actions of the terminal in the foregoing method examples. Alternatively, the processing unit 602 mainly performs an internal action of the terminal in the method examples, and the communication unit 603 may support communication between the apparatus 600 and another device.

In an embodiment, the communication unit 603 is configured to receive a second message from a first network-side apparatus, where the second message includes first identification information and information corresponding to a first candidate cell managed by a second network-side apparatus. The processing unit 602 is configured to determine, based on the first identification information and the information corresponding to the first candidate cell, a processing manner associated with the first candidate cell, where the first identification information is information determined by the second network-side apparatus to determine the processing manner, and the processing manner includes: performing protocol layer reestablishment, or performing protocol layer data recovery, or skipping performing protocol layer reestablishment; and/or determining a TA of the first candidate cell based on UE measurement, or skipping determining a TA of the first candidate cell based on UE measurement.

In a possible design, the information corresponding to the first candidate cell is determined by the first network-side apparatus.

In a possible design, the processing unit 602 is specifically configured to: when information corresponding to a source cell is the same as the information corresponding to the first candidate cell, and identification information associated with the source cell is the same as the first identification information, determine that the processing manner associated with the first candidate cell is skipping performing protocol layer reestablishment; or when information corresponding to a source cell is different from the information corresponding to the first candidate cell, or identification information associated with the source cell is different from the first identification information, determine that the processing manner associated with the first candidate cell is performing protocol layer reestablishment, or performing protocol layer data recovery.

In a possible design, the processing unit 602 is specifically configured to: when the information corresponding to the source cell is the same as the information corresponding to the first candidate cell, and the identification information associated with the source cell is the same as the first identification information, determine that the processing manner associated with the first candidate cell is determining the TA of the first candidate cell based on the UE measurement; or when the information corresponding to the source cell is different from the information corresponding to the first candidate cell, or the identification information associated with the source cell is different from the first identification information, determine that the processing manner associated with the first candidate cell is skipping determining the TA of the first candidate cell based on the UE measurement.

In a possible design, the first message further includes the identification information associated with the source cell and the information corresponding to the source cell.

(3) The apparatus 600 may be the network-side apparatus (for example, the first network device) in the foregoing embodiments. The processing unit 602 may support the apparatus 600 in performing actions of the first network device in the foregoing method examples. Alternatively, the processing unit 602 mainly performs an internal action of the first network device in the method examples, and the communication unit 603 may support communication between the apparatus 600 and another device.

In an embodiment, the communication unit 603 is configured to: send a first message to a second network-side apparatus, where the first message is used to request to use first identification information as identification information associated with a first candidate cell; and receive a second message from the second network-side apparatus, where the second message indicates acceptance or rejection of using the first identification information as the identification information associated with the first candidate cell, and the identification information associated with the first candidate cell is used to determine a processing manner associated with the first candidate cell, where the processing manner includes: performing protocol layer reestablishment, or performing protocol layer data recovery, or skipping performing protocol layer reestablishment; and/or determining a TA of the first candidate cell based on UE measurement, or skipping determining a TA of the first candidate cell based on UE measurement.

In a possible design, the first message is further used to request to use the first identification information as identification information associated with a second candidate cell.

In a possible design, the communication unit 603 is further configured to: receive topology information from the second network-side apparatus, where the topology information indicates that the first candidate cell and the second candidate cell correspond to a same DU, a same TRP, or same identification information; and determine the first identification information based on the topology information.

In a possible design, the second message indicates rejection of using the first identification information as the identification information associated with the first candidate cell, the second message includes second identification information, and the second identification information is used to request to use the second identification information as the identification information associated with the first candidate cell.

In a possible design, the second identification information is identification information that has been accepted by the second network-side apparatus.

In a possible design, the communication unit 603 is further configured to send a third message to a third network-side apparatus, where the third message is used to request to use third identification information as identification information associated with a third candidate cell, and the third identification information is different from the first identification information.

(4) The apparatus 600 may be the network-side apparatus (for example, the second network device) in the foregoing embodiments. The processing unit 602 may support the apparatus 600 in performing actions of the second network device in the foregoing method examples. Alternatively, the processing unit 602 mainly performs an internal action of the second network device in the method examples, and the communication unit 603 may support communication between the apparatus 600 and another device.

In an embodiment, the communication unit 603 is configured to: receive a first message from a first network-side apparatus, where the first message is used to request to use first identification information as identification information associated with a first candidate cell; and send a second message to the first network-side apparatus in response to the first message, where the second message indicates acceptance or rejection of using the first identification information as the identification information associated with the first candidate cell, and the identification information associated with the first candidate cell is used to determine a processing manner associated with the first candidate cell, where the processing manner includes: performing protocol layer reestablishment, or performing protocol layer data recovery, or skipping performing protocol layer reestablishment; and/or determining a TA of the first candidate cell based on UE measurement, or skipping determining a TA of the first candidate cell based on UE measurement.

In a possible design, the first message is further used to request to use the first identification information as identification information associated with a second candidate cell.

In a possible design, the communication unit 603 is further configured to send topology information to the first network-side apparatus, where the topology information indicates that the first candidate cell and the second candidate cell correspond to a same DU, a same TRP, or same identification information, and the topology information is used to determine the first identification information.

In a possible design, the second message indicates rejection of using the first identification information as the identification information associated with the first candidate cell, the second message includes second identification information, and the second identification information is used to request to use the second identification information as the identification information associated with the first candidate cell.

In a possible design, the second identification information is identification information that has been accepted by the second network-side apparatus.

It should be understood that division into the units in the foregoing apparatus is merely logical function division. During actual implementation, all or some of the units may be integrated into one physical entity, or may be physically separated. In addition, all the units in the apparatus may be implemented in a form of software invoked by a processing element, or may be implemented in a form of hardware; or some units may be implemented in a form of software invoked by a processing element, and some units may be implemented in a form of hardware. For example, each unit may be a separately disposed processing element, or may be integrated into a chip of the apparatus for implementation. In addition, each unit may alternatively be stored in a memory in a form of a program to be invoked by a processing element of the apparatus to perform a function of the unit. In addition, the units may be all or partially integrated, or may be implemented independently. The processing element herein may also be referred to as a processor, and may be an integrated circuit having a signal processing capability. In an implementation process, operations in the foregoing methods or the foregoing units may be implemented by using a hardware integrated logic circuit in the processor element or may be implemented in a form of software invoked by the processing element.

In an example, a unit in any one of the foregoing apparatuses may be one or more integrated circuits configured to implement the foregoing methods, for example, one or more application-specific integrated circuits (application-specific integrated circuit, ASIC), one or more microprocessors (digital signal processor, DSP), one or more field programmable gate arrays (field programmable gate array, FPGA), or a combination of at least two of these forms of integrated circuits. For another example, when the units in the apparatus may be implemented in a form in which a processing element schedules a program, the processing element may be a processor, for example, a general-purpose central processing unit (central processing unit, CPU) or another processor that can invoke the program. For still another example, the units may be integrated and implemented in a form of a system-on-a-chip (system-on-a-chip, SoC).

The foregoing unit for receiving is an interface circuit of the apparatus, and is configured to receive a signal from another apparatus. For example, when the apparatus is implemented in a form of a chip, the receiving unit is an interface circuit of the chip that is configured to receive a signal from another chip or apparatus. The foregoing unit for sending is an interface circuit of the apparatus, and is configured to send a signal to another apparatus. For example, when the apparatus is implemented in a form of a chip, the sending unit is an interface circuit of the chip that is configured to send a signal to another chip or apparatus.

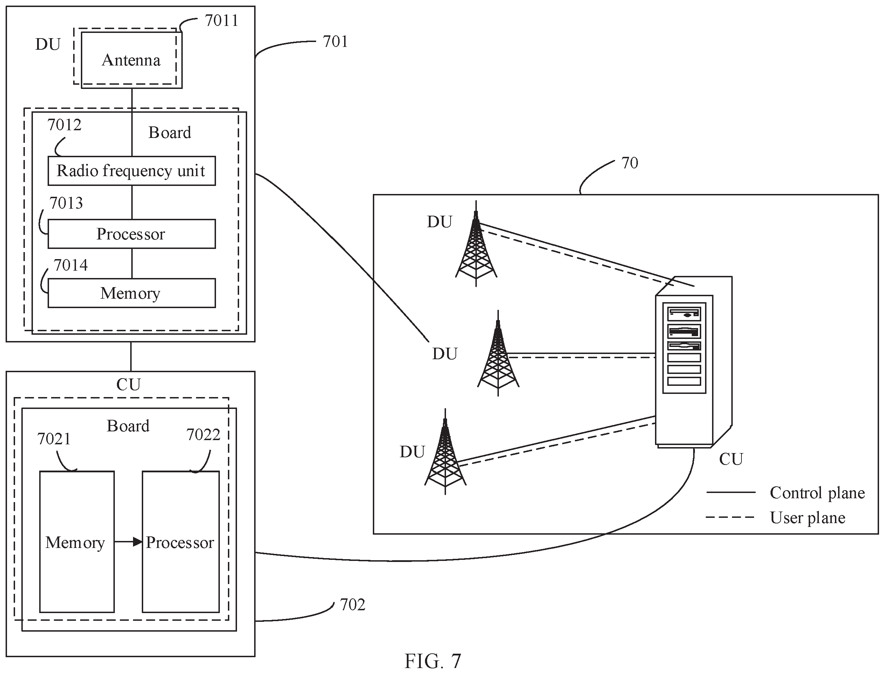

FIG. 7 is a diagram of a structure of a network-side apparatus (for example, a network device) according to an embodiment of this application. The network device may be used in the communication system shown in FIG. 1, to perform functions of the network device in the foregoing method embodiments. As shown in FIG. 7, the network device 70 may be an access network node, and the network device 70 may include one or more DUs 701 and one or more CUs 702. The DU 701 may include at least one antenna 7011, at least one radio frequency unit 7012, at least one processor 7013, and at least one memory 7014. The DU 701 is mainly configured to receive/send a radio frequency signal, perform conversion between a radio frequency signal and a baseband signal, and perform partial baseband processing. The CU 702 may include at least one processor 7022 and at least one memory 7021.

The CU 702 is mainly configured to: perform baseband processing, control the network device, and the like. The DU 701 and the CU 702 may be physically disposed together, or may be physically disposed separately, in other words, may be a distributed base station. The CU 702 is a control center of the network device, may also be referred to as a processing unit, and is mainly configured to complete a baseband processing function. For example, the CU 702 may be configured to control the network device to perform the operation processes related to the network device in the foregoing method embodiments.

In addition, optionally, the network device 70 may include one or more radio frequency units, one or more DUs, and one or more CUs. The DU may include at least one processor 7013 and at least one memory 7014, the radio frequency unit may include at least one antenna 7011 and at least one radio frequency unit 7012, and the CU may include at least one processor 7022 and at least one memory 7021.

In an example, the CU 702 may include one or more boards, and a plurality of boards may jointly support a radio access network (for example, a 5G network) of a single access standard, or may separately support radio access networks (such as an LTE network, a 5G network, or another network) of different access standards. The memory 7021 and the processor 7022 may serve one or more boards. In other words, a memory and a processor may be disposed on each board. Alternatively, a plurality of boards may share a same memory and a same processor. In addition, a necessary circuit may further be disposed on each board. The DU 701 may include one or more boards, and a plurality of boards may jointly support a radio access network (for example, a 5G network) of a single access standard, or may separately support radio access networks (such as an LTE network, a 5G network, or another network) of different access standards. The memory 7014 and the processor 7013 may serve one or more boards. In other words, a memory and a processor may be disposed on each board. Alternatively, a plurality of boards may share a same memory and a same processor. In addition, a necessary circuit may further be disposed on each board.

The network device shown in FIG. 7 can implement processes related to the network device in the foregoing method embodiments. Operations and/or functions of the modules in the network device shown in FIG. 7 are respectively intended to implement corresponding processes in the foregoing method embodiments. For details, refer to the descriptions in the foregoing method embodiments. To avoid repetition, detailed descriptions are properly omitted herein.

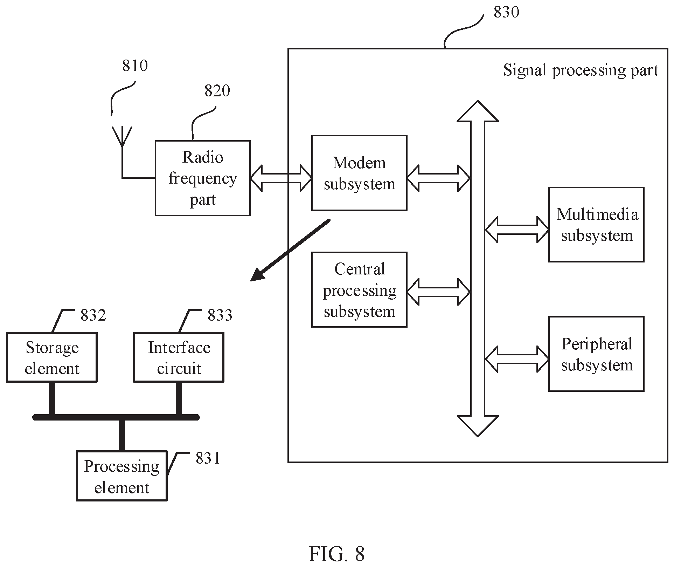

FIG. 8 is a diagram of a structure of a terminal-side apparatus (for example, terminal) according to an embodiment of this application. The terminal may be used in the communication system shown in FIG. 1, to implement operations of the terminal in the foregoing embodiments. As shown in FIG. 8, the terminal includes an antenna 810, a radio frequency part 820, and a signal processing part 830. The antenna 810 is connected to the radio frequency part 820. In a downlink direction, the radio frequency part 820 receives, through the antenna 810, information sent by a network device, and sends, to the signal processing part 830, the information sent by the network device for processing. In an uplink direction, the signal processing part 830 processes information of the terminal and sends the processed information to the radio frequency part 820, and the radio frequency part 820 processes the information of the terminal and then sends the processed information to the network device through the antenna 810.

The signal processing part 830 may include a modem subsystem, configured to process data at each communication protocol layer. The signal processing part 830 may further include a central processing subsystem, configured to implement processing of an operating system and an application layer of the terminal. In addition, the signal processing part 830 may further include another subsystem, for example, a multimedia subsystem or a peripheral subsystem. The multimedia subsystem is configured to control a camera or a screen display of the terminal, and the peripheral subsystem is configured to implement a connection to another device. The modem subsystem may be a separately disposed chip.

The modem subsystem may include one or more processing elements 831, for example, include a main control CPU and another integrated circuit. In addition, the modem subsystem may further include a storage element 832 and an interface circuit 833. The storage element 832 is configured to store data and a program. However, the program used to perform the methods performed by the terminal in the foregoing methods may not be stored in the storage element 832, but is stored in a memory outside the modem subsystem, and is loaded and used by the modem subsystem when to be used. The interface circuit 833 is configured to communicate with another subsystem.

The modem subsystem may be implemented by using a chip. The chip includes at least one processing element and an interface circuit. The processing element is configured to perform steps of any method performed by the terminal. The interface circuit is configured to communicate with another apparatus. In an implementation, units in the terminal for implementing the steps in the foregoing methods may be implemented in a form in which a processing element schedules a program. For example, the apparatus used in the terminal includes a processing element and a storage element. The processing element invokes a program stored in the storage element, to perform the method performed by the terminal in the foregoing method embodiments. The storage element may be a storage element located on a same chip as the processing element, namely, an on-chip storage element.

In another implementation, a program used to perform the method performed by the terminal in the foregoing methods may be in a storage element located on a different chip from the processing element, namely, an off-chip storage element. In this case, the processing element invokes or loads the program from the off-chip storage element to the on-chip storage element, to invoke and perform the method performed by the terminal in the foregoing method embodiments.

In still another implementation, units in the terminal for implementing the steps in the foregoing methods may be configured as one or more processing elements. These processing elements are disposed on the modem subsystem. The processing element herein may be an integrated circuit, for example, one or more ASICs, one or more DSPs, one or more FPGAs, or a combination of these types of integrated circuits. These integrated circuits may be integrated together to form a chip.

The units in the terminal for implementing the steps in the foregoing methods may be integrated together and implemented in a form of an SoC, and the SoC chip is configured to implement the foregoing methods. At least one processing element and a storage element may be integrated into the chip, and the processing element invokes a program stored in the storage element to implement the foregoing method performed by the terminal. Alternatively, at least one integrated circuit may be integrated into the chip, to implement the foregoing method performed by the terminal. Alternatively, with reference to the foregoing implementations, functions of some units may be implemented in a form in which the processing element invokes a program, and functions of some units may be implemented by the integrated circuit.

It can be learned that the foregoing apparatus used in the terminal may include at least one processing element and an interface circuit. The at least one processing element is configured to perform any method performed by the terminal in the foregoing method embodiments. The processing element may perform some or all steps performed by the terminal in a first manner, that is, by invoking a program stored in the storage element; or may perform some or all steps performed by the terminal in a second manner, that is, by combining instructions and a hardware integrated logic circuit in the processing element. Certainly, some or all steps performed by the terminal may alternatively be performed by combining the first manner and the second manner.

The processing element herein is the same as that described above, and may be implemented by using a processor. A function of the processing element may be the same as a function of the processing unit described in FIG. 6. For example, the processing element may be a general-purpose processor, for example, a CPU, or may be one or more integrated circuits configured to implement the foregoing method, for example, one or more ASICs, one or more microprocessors DSPs, one or more FPGAs, or a combination of at least two of the integrated circuit forms. The storage element may be implemented by using a memory, and a function of the storage element may be the same as a function of the storage unit described in FIG. 6. The storage element may be a memory, or may be a collective term of a plurality of memories.

The terminal shown in FIG. 8 can implement processes related to the terminal in the foregoing method embodiments. Operations and/or functions of modules in the terminal shown in FIG. 8 are respectively intended to implement corresponding processes in the foregoing method embodiments. For details, refer to the descriptions in the foregoing method embodiments. To avoid repetition, detailed descriptions are properly omitted herein.

An embodiment of this application further provides a communication system. The communication system includes the terminal and the first network device in the foregoing method Embodiment 1, or the communication system includes the first network device and the second network device in the foregoing method Embodiment 2, and optionally, further includes the terminal in the foregoing method Embodiment 2.

The terms "system" and "network" may be used interchangeably in embodiments of this application. "At least one" means one or more, and "a plurality of" means two or more. The term "and/or" describes an association relationship of associated objects, and indicates that three relationships may exist. For example, A and/or B may indicate the following three cases: Only A exists, both A and B exist, and only B exists, where A and B may be singular or plural. The character "/" generally indicates an "or" relationship between the associated objects. "At least one of the following items (pieces)" or a similar expression thereof indicates any combination of these items, including a single item (piece) or any combination of a plurality of items (pieces). For example, "at least one of A, B, or C" includes A, B, C, AB, AC, BC, or ABC, and "at least one of A, B, and C" may also be understood as including A, B, C, AB, AC, BC, or ABC. In addition, unless otherwise specified, ordinal numbers such as "first" and "second" in embodiments of this application are used to distinguish between a plurality of objects, and are not intended to limit a sequence, a time sequence, priorities, or importance of the plurality of objects.

A person skilled in the art should understand that embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more processes in the flowcharts and/or in one or more blocks in the block diagrams.

## Claims

1. A communication method, wherein the method is applied to a first network-side apparatus, and the method comprises:
receiving, from a second network-side apparatus, first identification information for a terminal-side apparatus, wherein the first identification information is associated with a first candidate cell managed by the second network-side apparatus;
determining second identification information based on the first identification information, wherein the second identification information is different from the first identification information; and
sending the second identification information to the terminal-side apparatus, wherein the second identification information is used to determine a processing manner associated with the first candidate cell, wherein
the processing manner comprises:
performing protocol layer reestablishment, or performing protocol layer data recovery, or skipping performing protocol layer reestablishment; and/or
determining a timing advance TA of the first candidate cell based on user equipment UE measurement, or skipping determining a TA of the first candidate cell based on UE measurement.

2. The method according to claim 1, wherein the first identification information is information determined by the second network-side apparatus to determine the processing manner.

3. The method according to claim 1 or 2, wherein that the second identification information is different from the first identification information comprises:
a value of the second identification information is different from that of the first identification information; or
the second identification information comprises the first identification information and information corresponding to the first candidate cell.

4. The method according to any one of claims 1 to 3, wherein the method further comprises:
receiving third identification information from a third network-side apparatus, wherein the third identification information is associated with a second candidate cell; and
determining the second identification information based on the first identification information comprises:
determining the second identification information when the first identification information is the same as the third identification information.

5. The method according to any one of claims 1 to 4, wherein the method further comprises:
sending a first message to the second network-side apparatus, wherein the first message is used to request configuration information of the processing manner.

6. The method according to any one of claims 1 to 5, wherein
the protocol layer reestablishment comprises packet data convergence protocol PDCP layer reestablishment or radio link control RLC layer reestablishment; and
the protocol layer data recovery comprises PDCP layer data recovery.

7. A communication method, wherein the method is applied to a terminal-side apparatus, and the method comprises:
receiving a second message from a first network-side apparatus, wherein the second message comprises first identification information and information corresponding to a first candidate cell managed by a second network-side apparatus; and
determining, based on the first identification information and the information corresponding to the first candidate cell, a processing manner associated with the first candidate cell, wherein
the first identification information is information determined by the second network-side apparatus to determine the processing manner; and
the processing manner comprises:
performing protocol layer reestablishment, or performing protocol layer data recovery, or skipping performing protocol layer reestablishment; and/or
determining a TA of the first candidate cell based on UE measurement, or skipping determining a TA of the first candidate cell based on UE measurement.

8. The method according to claim 7, wherein the information corresponding to the first candidate cell is determined by the first network-side apparatus.

9. The method according to claim 7 or 8, wherein determining, based on the first identification information and the information corresponding to the first candidate cell, the processing manner associated with the first candidate cell comprises:
when information corresponding to a source cell is the same as the information corresponding to the first candidate cell, and identification information associated with the source cell is the same as the first identification information, determining that the processing manner associated with the first candidate cell is skipping performing protocol layer reestablishment; or
when information corresponding to a source cell is different from the information corresponding to the first candidate cell, or identification information associated with the source cell is different from the first identification information, determining that the processing manner associated with the first candidate cell is performing protocol layer reestablishment or performing protocol layer data recovery.

10. The method according to any one of claims 7 to 9, wherein determining, based on the first identification information and the information corresponding to the first candidate cell, the processing manner associated with the first candidate cell comprises:
when the information corresponding to the source cell is the same as the information corresponding to the first candidate cell, and the identification information associated with the source cell is the same as the first identification information, determining that the processing manner associated with the first candidate cell is determining the TA of the first candidate cell based on the UE measurement; or
when the information corresponding to the source cell is different from the information corresponding to the first candidate cell, or the identification information associated with the source cell is different from the first identification information, determining that the processing manner associated with the first candidate cell is skipping determining the TA of the first candidate cell based on the UE measurement.

11. The method according to claim 9 or 10, wherein the first message further comprises the identification information associated with the source cell and the information corresponding to the source cell.

12. A communication method, wherein the method is applied to a first network-side apparatus, and the method comprises:
sending a first message to a second network-side apparatus, wherein the first message is used to request to use first identification information as identification information associated with a first candidate cell; and
receiving a second message from the second network-side apparatus, wherein the second message indicates acceptance or rejection of using the first identification information as the identification information associated with the first candidate cell, and the identification information associated with the first candidate cell is used to determine a processing manner associated with the first candidate cell, wherein
the processing manner comprises:
performing protocol layer reestablishment, or performing protocol layer data recovery, or skipping performing protocol layer reestablishment; and/or
determining a TA of the first candidate cell based on UE measurement, or skipping determining a TA of the first candidate cell based on UE measurement.

13. The method according to claim 12, wherein the first message is further used to request to use the first identification information as identification information associated with a second candidate cell.

14. The method according to claim 13, wherein the method further comprises:
receiving topology information from the second network-side apparatus, wherein the topology information indicates that the first candidate cell and the second candidate cell correspond to a same distributed unit DU, or a same transmission reception point TRP, or same identification information; and
determining the first identification information based on the topology information.

15. The method according to any one of claims 12 to 14, wherein the second message indicates rejection of using the first identification information as the identification information associated with the first candidate cell, the second message comprises second identification information, and the second identification information is used to request to use the second identification information as the identification information associated with the first candidate cell.

16. The method according to claim 15, wherein the second identification information is identification information that has been accepted by the second network-side apparatus.

17. The method according to any one of claims 13 to 16, wherein the method further comprises:
sending a third message to a third network-side apparatus, wherein the third message is used to request to use third identification information as identification information associated with a third candidate cell, and the third identification information is different from the first identification information.

18. A communication method, wherein the method is applied to a second network-side apparatus, and the method comprises:
receiving a first message from a first network-side apparatus, wherein the first message is used to request to use first identification information as identification information associated with a first candidate cell; and
sending a second message to the first network-side apparatus in response to the first message, wherein the second message indicates acceptance or rejection of using the first identification information as the identification information associated with the first candidate cell, and the identification information associated with the first candidate cell is used to determine a processing manner associated with the first candidate cell, wherein
the processing manner comprises:
performing protocol layer reestablishment, or performing protocol layer data recovery, or skipping performing protocol layer reestablishment; and/or
determining a TA of the first candidate cell based on UE measurement, or skipping determining a TA of the first candidate cell based on UE measurement.

19. The method according to claim 18, wherein the first message is further used to request to use the first identification information as identification information associated with a second candidate cell.

20. The method according to claim 19, wherein the method further comprises:
sending topology information to the first network-side apparatus, wherein the topology information indicates that the first candidate cell and the second candidate cell correspond to a same DU, or a same TRP, or same identification information, and the topology information is used to determine the first identification information.

21. The method according to claim 18, wherein the second message indicates rejection of using the first identification information as the identification information associated with the first candidate cell, the second message comprises second identification information, and the second identification information is used to request to use the second identification information as the identification information associated with the first candidate cell.

22. The method according to claim 21, wherein the second identification information is identification information that has been accepted by the second network-side apparatus.

23. A communication apparatus, comprising a module configured to perform the method according to any one of claims 1 to 6, or a module configured to perform the method according to any one of claims 7 to 11, or a module configured to perform the method according to any one of claims 12 to 17, or a module configured to perform the method according to any one of claims 18 to 22.

24. A communication apparatus, comprising a processor, wherein the processor is coupled to a memory, the memory stores a computer program, and the processor is configured to invoke the computer program in the memory, so that the communication apparatus performs the method according to any one of claims 1 to 6, or the method according to any one of claims 7 to 11, or the method according to any one of claims 12 to 17, or the method according to any one of claims 18 to 22.

25. A communication system, wherein the communication system comprises a first network-side apparatus and a terminal-side apparatus, the first network-side apparatus is configured to perform the method according to any one of claims 1 to 6, and the terminal-side apparatus is configured to perform the method according to any one of claims 7 to 11.

26. A communication system, wherein the communication system comprises a first network-side apparatus and a second network-side apparatus, the first network-side apparatus is configured to perform the method according to any one of claims 12 to 17, and the second network-side apparatus is configured to perform the method according to any one of claims 18 to 22.

27. A computer-readable storage medium, wherein the storage medium stores a computer program or instructions, and when the computer program or the instructions are executed by a computer, the method according to any one of claims 1 to 6 is performed, or the method according to any one of claims 7 to 11 is performed, or the method according to any one of claims 12 to 17 is performed, or the method according to any one of claims 18 to 22 is performed.

28. A computer program product, wherein when a computer reads and executes the computer program product, the method according to any one of claims 1 to 6 is performed, or the method according to any one of claims 7 to 11 is performed, or the method according to any one of claims 12 to 17 is performed, or the method according to any one of claims 18 to 22 is performed.
